# EUROPEAN PATENT SPECIFICATION

(11) **EP 1 600 059 B1**
(45) Date of publication and mention of the grant of the patent: **17.09.2008**
(21) Application number: 04703888.0
(22) Date of filing: 21.01.2004
(51) Int. Cl.: A23L 1/10, C12C 1/02

(54) **METHOD FOR IMMERSING GRAINS**
VERFAHREN ZUM EINTAUCHEN VON GETREIDE
PROCEDE D'IMMERSION DE GRAINS

(30) Priority: 21.01.2003 JP 2003011897
(43) Date of publication of application: 30.11.2005
(73) Proprietor: Sapporo Breweries Limited, Tokyo 150-8522 (JP)
(72) Inventor: KISHINAMI, Isao, Sapporo Breweries Limited, Nitta-gun, Gunma 370-0393 (JP)
(74) Representative: Vossius & Partner
(86) International application number: PCT/JP2004/000468
(87) International publication number: WO 2004/064541

(56) References cited:
- JP-A- 1 086 846
- JP-A- 9 275 917
- JP-A- 59 203 453
- JP-A- 2001 238 612
- JP-A- 2001 346 531

## Description

### TECHNICAL FIELD

The present invention relates to an immersion method for providing water to grains of cereals such as barley and causing the same to sprout.

### BACKGROUND ART

Hitherto, in an immersion process of providing water to grains such as barley for sprouting the same, means for forcing the grains to absorb water is not employed, and the barley grains and water are simply allowed to coexist under a normal pressure and to be left stand still for a certain period. As means reported until now for facilitating the grains to absorb water includes (1) a method of scratching the barley grain to allow water to enter directly to an albumen tissue, and (2) a method of mechanically pressing the barley grain after having pressed against a mesh or the like to bruise the same to allow water to enter directly to the albumen tissue.

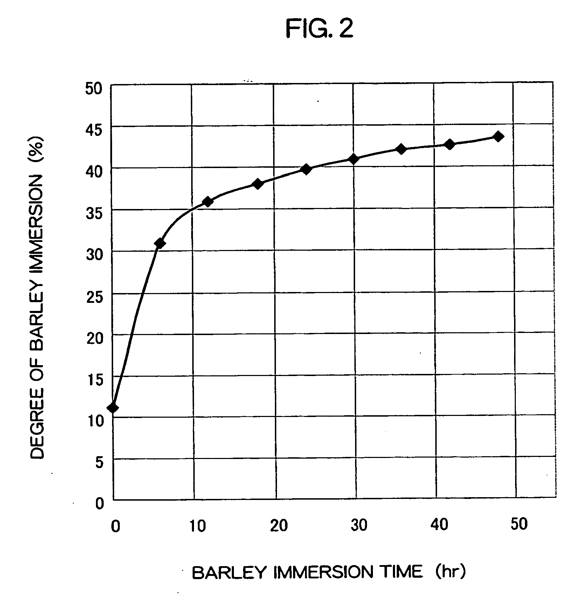

However, with the former and later methods, since the entire surfaces of the grains cannot be scratched uniformly, malts manufactured by executing these processes are deteriorated in "uniformity" than those manufactured by applying a normal immersion method, are extremely low in appearance quality, and subject to microorganism during immersion and germination. Therefore, these methods are not currently used. On the other hand, the speed of water absorption of the grains such as barley is the highest when water absorption is initiated, and is lowered with time. Therefore, in the related art, a long time (about 36 to 50 hours) of immersion process is needed. This condition is shown in Fig. 2. Fig. 2 shows an increasing pattern of the degree of immersion (water content %) with time in association with proceeding of immersion process of "Myogi Nijo". As is clear from Fig. 2, a pattern of water absorption of the barley grain is fast in the initiation of immersion, and is gradually slowed with time of immersion of barley. In this manner, in the later stage of barley immersion process, positive movement (intrusion) of water into the grains does not occur even though the barley grain is simply kept in water. Therefore, in order to achieve a high degree of immersion in the immersion method in the related art, the immersion process for a long time for allowing the barley grain and water to coexist is essential.

In view of such a method in the related art, it is an object of the present invention is to provide a method which enables grains to absorb water in a short time without scratching the same at all.

### DISCLOSURE OF THE INVENTION

In order to solve the above-described problem, the present invention provide a grain immersion method including a step of storing grains for water absorption and water in a pressure-resistant container, a step of reducing the pressure in the pressure-resistant container, and a step of releasing the reduced pressure. Accordingly, the grains can be caused to absorb water in a short time without being scratched at all, and water can be absorbed uniformly through the entire surfaces of the grains. Since the grains are not scratched at all, the appearance quality is prevented from significant deterioration. In addition, by using this method for manufacturing the malt, the malt can be manufactured without being affected by microorganism during immersion and germination.

Also, by employing a step of abruptly restoring the normal pressure as the step of releasing the reduced pressure, absorption of water into the grains can be achieved quite effectively.

By causing the pressure reduction in the step of reducing the pressure in the pressure-resistant container to be maintained at a certain period at 10⁻⁴ Torr in the grain immersion method, water absorption can be accelerated at a suitable speed without problem.

By using a grain immersion apparatus including the pressure-resistant container having a supply port for the grains and water, which is either common or separate, and a connecting port for a vacuum pump on the upper portion, and a discharge port for the grains after having immersed on the lower portion, the above-described immersion method can be performed easily and effectively.

Furthermore, with the grain immersion apparatus in which the pressure-resistant container further includes a reduced pressure releasing port on the upper portion thereof, the step of abruptly restoring the normal pressure can be achieved easily and effectively.

By employing the vacuum pump having a capability of maintaining a degree of vacuum of 10⁻⁵ to 10⁻⁴ Torr in a state of being connected to the pressure-resistant container, water absorption can be accelerated at a suitable speed without problem.

### BRIEF DESCRIPTION OF DRAWINGS

Fig. 1 is an explanatory drawing showing a grain immersion apparatus used in a first embodiment of the present invention.
Fig. 2 is a drawing explaining the change of the degree of immersion (water content) % in the step of immersing barley.

### BEST MODE FOR CARRYING OUT THE INVENTION

Hereinafter, an embodiment of the present invention will be described in conjunction with drawings. The embodiment here will be described in conjunction with a case of using barley.

An embodiment of an apparatus used here will be described first.

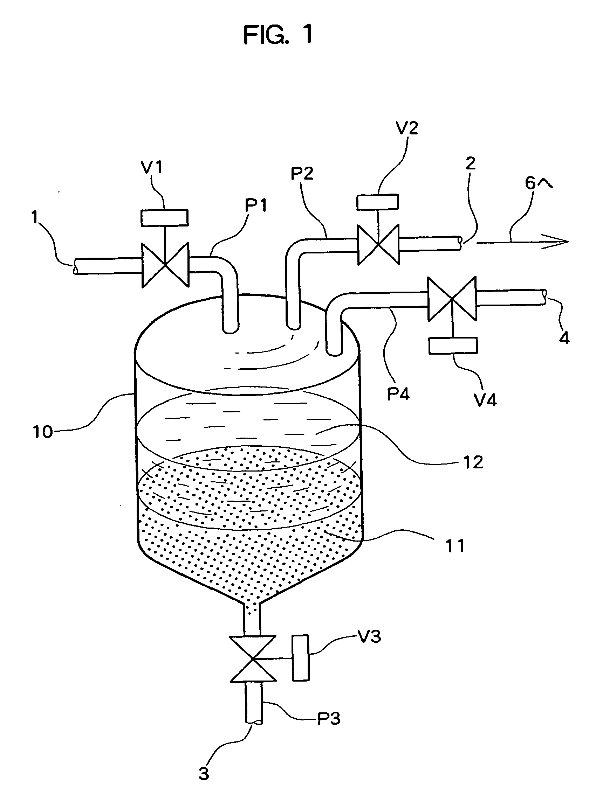

Fig. 1 is an explanatory drawing showing a grain immersion apparatus. In Fig. 1, the grain immersion apparatus includes basically a pressure-resistant container 10 for storing the grains and water. The pressure-resistant container 10 is provided with a common supply port 1 for the grains and water on the upper portion thereof (it is used commonly here, but a port for supplying the grains and the port for supplying water may be separately provided). In addition, a connecting port 2 for a vacuum pump 6 is provided and a discharge port 3 for the grains after having immersed is provided on the lower portion thereof. The pressure-resistant container is further provided with a reduced pressure releasing port 4 for abruptly restoring the interior of the pressure-resistant container to the normal pressure. Also, the vacuum pump 6 is a vacuum pump having a capability to maintain the degree of vacuum at 10⁻⁵ to 10⁻⁴ Torr in a state of being connected to the pressure-resistant container.

The supply port 1, the connecting port 2, the discharge port 3, and the reduced pressure releasing port 4 are respectively provided with a piping and a valve, and a piping P1 and a vale V1 are connected to the supply port 1, a piping P2 and a valve V2 are connected to the connecting port 2, a piping P3 and a valve V3 are connected to the discharge port 3, and a piping P4 and a reduced pressure releasing valve V4 are connected to the reduced pressure releasing port 4.

Fig. 1 shows a state in which grains 11 and water 12 are already stored therein. In order to execute the immersion method, the valve V1 of the supply port 1 is opened and a proper amount of grain and water are put in the pressure-resistant container 10 through the piping P1 in a state in which the valve V3 of the discharge port 3 is closed. Subsequently, the valve V1 is closed, and the valve V4 of the reduced pressure releasing port 4 is also closed to open the valve V2 of the connecting port connected to the vacuum pump 6 (this may be kept opened from the beginning), and the pressure of the interior of the pressure-resistant container 10 is reduced in the vacuum pump 6. After having reduced the pressure, the valve V2 is closed and left standstill for a certain period. During this time, water permeates into the grains. Since the pressure is in a state of being reduced, permeation is accelerated and hence the speed of permeation is high. After having elapsed the above-described certain time, the reduced pressure releasing valve V4 is opened to abruptly restore the pressure to the normal pressure in the pressure-resistant container 10. This abrupt restoration also helps powerful permeation of water content to the grains.

Repeating the operation of the steps of pressure reduction and restoration to the normal pressure is effective for reducing the time required for immersion. It is also effective to discharge only water from the discharge port 3 during these steps to bring the grains into the dried state, and then supply water again to perform the operation of the steps of pressure reduction and restoration to the normal pressure. Such maintenance of dried state of the grains may be performed by taking the grains out of the above-described immersion apparatus once, and putting through the supply port 1 together with water again.

Finally, by opening the valve V3, the grains 11 and water 12, having completed immersion, are delivered from the discharge port 3 to the subsequent germination and dry process.

Subsequently, a comparative example and a detailed example, in which a method according to the present invention is used, are described.

The used material is barley ("Myogi Nijo" (name of registered breed) (2001, produced in Saitama prefecture)), which contains 10.3% of crude protein, 11.2% of water content, the germination rate thereof is 98%, and the rate of granulation thereof is 99%.

In a first step, the conventional method (immersion method) shown below was performed in order to allow the barley to absorb water to a predetermined degree of immersion (water content %). The immersion water temperature was set to a constant temperature of 16 °C. The immersion process is performed with barley immersing scheme of 10 hr (WET) - 8hr (DRY) - 8hr (WET) - 6hr (DRY) - 4hr (WET) - 6hr (DRY) - 4hr (WET) - 2hr (DRY). Here, 10hr (WET) - 8 hr (DRY) means to immerse the grains for 10 hours, and take the same from the immersion apparatus once, and leave the grain for draining water off for 8 hours. Although the time is different, 8hr (WET) - 6hr (DRY) also has the same meaning. In the above-described case, the operation of immersion and water draining was repeated four times.

On the other hand, the immersion method by pressure reduction according to the present invention (the immersion method in this case may be referred to as the pressure-reduction water-absorbing method) employed a compact size immersion apparatus was performed in the following manner. The immersed barley (250 g of barley without water content) becoming the above-described predetermined degree of immersion (water content percent) is stored in the pressure-resistant container, and tap water was added to the extent that the barley seeds are covered by water (about 300 ml). The pressure was reduced by a vacuum rotary pump, and in the reduced pressure, the container was left standstill for two hours.

During this period, the container was shaken sometimes, and generated air bubbles (for example, dissolved gas) were separated form the barley. The interior of the container was kept at about 10⁻⁴ Torr in degree of pressure reduction for two hours. The time and the degree of pressure reduction may be varied according to the objective barley quality as needed.

After having completed the pressure reduction process, the pressure reduction was abruptly broken and the barley grains are quickly returned under the normal pressure. Subsequently, the sample was transferred to the same environment as the normal germination, and the malts were manufactured in the conventional manner.

The following two examples of immersion process for comparison were executed; (1) the immersed barley which became the above-described predetermined degree of immersion (water content percent) was kept standstill in air (saturated water vapor pressure) for two hours (not immersed in water, no pressure reduction is performed, no processing), and (2) the immersed barley of the above-described predetermined degree of immersion was immersed in tap water for two hours at 16°C at a normal pressure (atmospheric pressure) (immersed in water, no pressure reduction is performed, conventional method). As an embodiment of the present invention, the immersed barley of the above-described predetermined degree of immersion was subjected to pressure reduction and water absorption for two hours (pressure-reduction water-absorbing process).

Table 1 shown below shows the change of the degree of immersion before and after processing in the above-described three examples.

**Table 1**

| | no-processing (given sample) | pressure-reduction water absorbing process | immersing process (conventional method) |
|---|---|---|---|
| | degree of immersion (water content %)) | | |
| before process | 40.2 | 40.2 | 40.2 |
| after process | 40.2 | 41.6 | 40.4 |

As shown in Table 1, the barley of 40.2 in degree of barley immersion is increased (increasing rate 1.4%) to 41.6 in degree of barley immersion by executing pressure-reduction water-absorbing process for two hours. In order to increase the degree of barley immersion of the barley of about 40 in degree of barley immersion by 1.4% under the normal barley immersion condition (normal pressure) (Fig. 1), it takes 1.4/1.0×6=8.4 hours since it increases about 1.0% in 6 hours. Therefore, with this method, the barley immersion time which normally takes about 8.5 hours may be reduced to two hours. In other words, by using the pressure-reduction water-absorbing method, significant reduction in barley immersion time is enabled.

As an influence to the malts of the barley seeds by executing the pressure-reduction water-absorbing process, germination disability was not recognized, and generation of microorganism was not recognized. In comparison with the malt manufactured according to the related art, radicle or plumelet are not affected by this process.

Table 2 shows analytical values of the malt in the cases in which the above-described no-process, the pressure-reduction water-absorbing process, and the immersion process are performed. In this case, the pressure-reduction water-absorbing process and the immersion process are performed for the same period (two hours) .

**Table 2**

| The change of analytical values of the malt for each process | | | |
|---|---|---|---|
| | comparison (no process) | pressure-reduction water-absorbing process | immersion process (conventional method) |
| water content (%) | 4.2 | 4.6 | 4.5 |
| saccharification time (minutes) | <9 | <9 | <9 |
| filtrations speed (minutes) | 13 | 13 | 11 |
| transparency | 3 | 1 | 1 |
| chromaticity (EBC) | 3.5 | 4.8 | 3.1 |
| boiled chromaticity (EBC) | 5.6 | 7.8 | 5.7 |
| wind dry extract (%) | 80.1 | 81.2 | 81 |
| absolute extract (%) | 83.6 | 85.1 | 84.8 |
| SN (%) | 0.737 | 0.888 | 0.795 |
| TN (%) | 1.664 | 1.648 | 1.651 |
| crude protein (%) | 10.4 | 10.3 | 10.3 |
| KZ (%) | 44.3 | 53.9 | 48.2 |
| EVG (%) | 87.6 | 89.3 | 88.6 |
| enzyme power (°WK) | 269 | 273 | 252 |
| VZ45°C(%) | 37.8 | 51.8 | 43.8 |
| viscosity (mPa·s) | 1.52 | 1.5 | 1.52 |
| Friability (%) | 97.4 | 95.5 | 95.7 |
| β glucoan (mg/l) | 31 | 49 | 60 |

As is seen from Table 2, when the barley is subjected to the pressure-reduction water-absorbing process, the soluble nitrogen (SN) obviously increases. In other words, while the soluble nitrogen for no processing was 0.737%, it was 0.888 (1.2 times) for the pressure reduction process. In the pressure-reduction water-absorbing process, decomposition is accelerated not only for nitrogen contents, but also for carbohydrate (mainly cell wall and starch). In other words, the value of the VZ45°C (%) is 37.8 for no processing, but in contrast, 51.8 (1.4 times) in pressure reduction process. Therefore, "modification" of the malt is accelerated by the pressure-reduction water-absorbing process, thereby contributing to the growth of the malts.

The speed of water absorption of the barley grains is the highest when water absorption is started, and is slowed with time. Accordingly, although a long period (about 36 to 50 hours) of the barley immersion process was necessary in the related art, reduction of the barley immersion time is enabled in the above-described embodiment. Also, further acceleration of "melting" of the grains such as the malts is enabled.

As described above, with the grain immersion method including the step of reducing the pressure in the pressure-resistant container and the step of releasing the reduced pressure, it is possible to allow the grains to absorb water in a short time without scratching at all and to allow the grains to absorb water uniformly through the entire surfaces thereof. In addition, by using this method in manufacture of the malts, the grains are prevented from being scratched, and hence the appearance quality is stabilized, and smooth manufacture of the malts is enabled without being affected by microorganism during immersion and germination.

### INDUSTRIAL APPLICABILITY

As described above, the immersion method according to the present invention is suitable for improving the efficiency of immersion when used in the immersion method for grains such as malts.

## Claims

1. A grain immersion method comprising: a step of storing grains of barley for water absorption and water within a pressure-resistant container; a step of reducing the pressure in the pressure-resistant container to maintain a degree of vacuum at about 10⁻⁴ Torr at a certain period; and a step of releasing the reduced pressure.

2. The grain immersion method according to Claim 1, **characterized in that** the step of releasing the reduced pressure is a step of abruptly restoring the normal pressure.

## Patentansprüche

1. Korneintauchverfahren, das aufweist: einen Schritt des Lagerns von Gerstenkörnern zur Wasseraufnahme und Wasser in einem druckfesten Behälter; einen Schritt des Reduzierens des Drucks im druckfesten Behälter, um zu einem bestimmten Zeitabschnitt einen Vakuumgrad von etwa 10⁻⁴ Torr aufrechtzuerhalten; und einen Schritt des Lösens des reduzierten Drucks.

2. Korneintauchverfahren nach Anspruch 1, **dadurch gekennzeichnet, daß** der Schritt des Lösens des reduzierten Drucks ein Schritt des abrupten Wiederherstellens des Normaldrucks ist.

## Revendications

1. Procédé d'immersion de grains comprenant : une étape de stockage de grains d'orge pour absorption d'eau et d'eau dans un conteneur résistant à la pression ; une étape de réduction de la pression dans le conteneur résistant à la pression pour maintenir un degré de vide à environ 10⁻⁴ Torr à un instant donné ; et une étape de libération de la pression réduite.

2. Procédé d'immersion de grains selon la revendication 1, **caractérisé en ce que** l'étape de libération de la pression réduite est une étape de rétablissement brusque de la pression normale.
